# EUROPÄISCHE PATENTANMELDUNG

(11) **EP 2 092 865 A1**
(43) Veröffentlichungstag der Anmeldung: **26.08.2009**
(21) Anmeldenummer: 08151758.3
(22) Anmeldetag: 21.02.2008
(51) Int. Cl.: A47J 37/07

(54) **Tischgrill**

(71) Anmelder: Vulcano, Tisch-Cheminée GmbH, 8143 Stallikon (CH)
(72) Erfinder: Grunder, Roger, 8143, Stallikon (CH)
(74) Vertreter: Rutz & Partner

(57) **Zusammenfassung**

Der mit wenigstens einem Grillgutträger (9), beispielsweise einem Fleischspiess versehene Tischgrill (1), dient dem Grillieren von Speisen. Der Tischgrill (1) weist einen mit einer Austrittsöffnung (35) versehenen Luftschacht (3) auf, der aus zwei einander gegenüberliegenden längeren ersten Seitenwänden (31) und zwei einander gegenüberliegenden kürzeren zweiten Seitenwänden (32) besteht, und innerhalb dessen ein Brenner (8) mit einer zumindest annähernd rechteckförmigen Brenneröffnung (81) angeordnet ist, die entsprechend der Austrittsöffnung (35) ausgerichtet ist. Erfindungsgemässe sind die einander gegenüberliegenden, ersten Seitenwände (31) mit parallel zur Brenneröffnung (81) ausgerichteten Öffnungsschlitzen (311) versehen, durch die Luftströme (61, 62) in den Luftschacht (3) eintreten und durch die Austrittsöffnung (35) wieder austreten können.

## Beschreibung

Die Erfindung betrifft eine auf einen Esstisch aufsetzbare Vorrichtung zum Grillieren von Speisen nach dem Oberbegriff des Patentanspruchs 1.

Eine gattungsgemässe Vorrichtung ist aus [1], EP 0 617 908 A1 bekannt. Die dort beschriebene Tisch-Vorrichtung, weist einen vorzugsweise rutschfest auf einer Platte aus Holz, Stein oder dgl. aufsetzbaren Brenner und einen über dem Brenner wegnehmbar angeordneten Grillgutträger auf. Bei dieser Vorrichtung ist der Brenner von einer, von der Platte wenigstens teilweise distanzierten, den Brenner überragenden, kaminartigen Haube mit seitlichem Abstand umgeben. Die Seitenwände der Haube und die gegenüberliegenden Wandungen des Brenners begrenzen Luftströmungskanäle, welche bodenseitig mit der Umgebungsluft kommunizieren.

In [1] wurde bereits beschrieben, dass das Grillieren von Fleisch über einer offenen Flamme mit Schwierigkeiten verbunden sein kann. Bei der Verwendung grösserer, typischerweise im Garten verwendeter Grillgeräte, wie sie z.B. aus [2], DE 19649462 A1 bekannt sind, sollte daher eine Person den Grillvorgang stets überwachen, um das Grillgut entsprechend dem festgestellten Garzustand jeweils passend zu positionieren und zu entnehmen. Ferner ist bei der aus [2] bekannten Vorrichtung ein kontinuierlich höhenverstellbarer horizontaler, der Aufnahme gluterzeugender Holzkohle dienender Grillboden derart vorgesehen, dass der Abstand zwischen dem Grillboden und einem darüber befindlichen Grillrost stufenlos veränderbar ist.

Während bei einem solchen Gartengrill allfällige Mängel des Grillvorgangs, durch passende Einstellung des Grills, durch geeignete Zugabe von Holzkohle, durch Positionieren und Wenden des Grillguts, gegebenenfalls auch durch Entfernen zu stark grillierter Teile, vermieden oder beseitigt werden können, sind entsprechende Eingriffe bei einem Tischgrill nur beschränkt möglich und weitgehend unerwünscht. Der Tischgrill, der in Gaststätten oder zuhause auf dem Esstisch verwendet wird, soll optional funktionieren, ohne dass Einstellungen während des Grillvorgangs notwendig sind.

Besonders wichtig für den optimalen Verlauf des Grillprozesses ist, dass die von der Vorrichtung abgegebenen Flammen das Grillgut gleichmässig erfassen. Diesbezüglich bestehen bei bekannten Vorrichtungen, beispielsweise bei der aus [1] bekannten Lösung noch erhebliche Mängel, die den Einsatz solcher Vorrichtungen insbesondere in Gaststätten in Frage stellen. Als besonders störend wurde festgestellt, dass sich die vom Brenner abgegebenen Flammen im Wesentlichen in der Mitte konzentrieren. Die auf dem Spiess angeordneten Fleischstücke werden daher unterschiedlich durchgebraten. Während die an den Spiessenden angeordneten Fleischstücke oft ungenügend gegart werden, werden in der Mitte des Spiesses zu starke Einwirkungen auf das Grillgut registriert. Indem die Fleischstücke vom Spiess entnommen und entsprechend dem Garzustand wieder aufgesetzt werden, kann ein gleichmässigeres Garen des Grillguts erzielt werden. Diese Manipulationen, die der Tätigkeit des Grilleurs bei einer grösseren Grillanlage entsprechend, sind bei einem Tischgrill, insbesondere bei der Verwendung jedoch unerwünscht. Insbesondere in Restaurants sollen Manipulationen dieser Art vermieden werden.

Der vorliegenden Erfindung liegt daher die Aufgabe zugrunde, einen verbesserten Tischgrill zu schaffen.

Insbesondere ist ein in Gaststätten verwendbarer Tischgrill zu schaffen, bei dem das Grillgut optimal gebraten wird, ohne dass unerwünschte Manipulationen seitens der Gäste notwendig sind.

Insbesondere ist ein Tischgrill zu schaffen, mittels dessen das Grillgut gleichmässiger gegart werden kann.

Diese Aufgabe wird mit einem Tischgrill gelöst, welcher die in Anspruch 1 angegebenen Merkmale aufweist. Vorteilhafte Ausgestaltungen der Erfindung sind in weiteren Ansprüchen angegeben.

Der mit wenigstens einem Grillgutträger, beispielsweise einem Fleischspiess, versehene Tischgrill, dient dem Grillieren von Speisen auf einem Esstisch in Gaststätten oder zuhause. Der Tischgrill weist einen mit einer Austrittsöffnung versehenen Luftschacht auf, der aus zwei einander gegenüberliegenden längeren ersten Seitenwänden und zwei einander gegenüberliegenden kürzeren zweiten Seitenwänden besteht. Innerhalb des Luftschachts ist ein Brenner mit einer längsgestreckten, vorzugsweise zumindest annähernd rechteckförmigen Brenneröffnung vorgesehen, die entsprechend der Austrittsöffnung des Luftschachts ausgerichtet ist. Erfindungsgemässe sind die einander gegenüberliegenden, ersten Seitenwände mit parallel zur Brenneröffnung ausgerichteten Öffnungsschlitzen versehen, durch die Luftströme in den Luftschacht eintreten und durch die Austrittsöffnung wieder austreten können.

Durch die Anordnung der Öffnungsschlitze in den längeren ersten Seitenwänden, vorzugsweise entsprechend der Länge des Brenners, resultiert ein ausserordentlich günstiger Verlauf der Luftströmungen im Luftschacht. Die in die Öffnungsschlitze eintretende Luft strömt praktisch vertikal nach oben, so dass bei der Austrittsöffnung des Luftschachts ein etwa rechteckiger Strömungsquerschnitt mit zumindest annähernd homogener Strömungsdichte resultiert. Die vom Brenner abgegebene Wärme wird daher gleichmässig an das Grillgut abgegeben.

Zur Optimierung der Luftströmung werden innerhalb des Luftschachts vorzugsweise plattenförmige Luftleitelemente parallel zu den Öffnungsschlitzen angeordnet, durch die die Luftströme erfasst und zur Austrittsöffnung hin geführt werden. Auf diese Weise gelingt es, die Luftströme noch besser zu kontrollieren und auf das Grillgut zu konzentrieren.

In einer besonders vorteilhaften Ausgestaltung weisen die Luftleitelemente unterschiedliche Neigungen auf, so dass das erste Luftleitelement den von ihm geführten Luftstrom gegen das zweite Luftleitelement führt, welches einen resultierenden Luftstrom zur Austrittsöffnung hin führt. Auf diese Weise wird im Bereich der Austrittsöffnung eine laminare Luftströmung erzielt, welche eine gleichmässige Wärmeeinwirkung auf das Grillgut gewährleistet.

In einer vorzugsweisen Ausgestaltung sind zumindest annähernd rechteckförmige Flanschelemente aus den ersten Seitenwänden derart ausgeschnitten, dass deren kürzere Seiten und die längere untere Kante frei liegen. Die je mit einem der Luftleitelemente versehenen Flanschelemente können daher nach innen gegeneinander gebogen werden, so dass die Öffnungsschlitze freigelegt werden.

Sofern die Flanschelemente nicht selbst die Luftleitelemente bilden, können die Flanschelemente als Trägerelemente für separat gefertigte Luftleitelemente dienen. Beispielsweise werden Luftleitelemente aus wärmeresistentem Metall, vorzugsweise aus hochwertigem Stahlblech, gefertigt. Beispielsweise werden rechteckförmige Stahlbleche gestanzt, welche derart abgewinkelt werden, das Luftleitelemente und Flanschstücke resultieren, von denen Letztere, beispielsweise durch Nieten oder Toxen, mit den Flanschelementen der ersten Seitenwände verbindbar sind.

Die Länge der Öffnungsschlitze entspricht vorzugsweise etwa der Länge des Brenners oder ist etwas länger gewählt, so dass der Strömungsverlauf über den gesamten Brennerbereich gleichmässig verteilt ist.

In vorzugsweisen Ausgestaltungen können die Öffnungsschlitze mittels eines Schiebers zumindest teilweise verschliessbar sein, um den Garprozess zu kontrollieren und die Wärmeabgabe an das Grillgut anzupassen. Sofern beispielsweise Gemüse oder Fisch gegrillt wird, wird der Querschnitt der Öffnungsschlitze vorzugsweise reduziert. Vorzugsweise wird ein vertikal verschiebbarer Schieber vorgesehen, durch den die Höhe der Öffnungsschlitze, nicht aber deren Länge verändert wird.

Die zweiten Seitenwände sind an deren Oberseiten vorzugsweise mit wenigstens einer der Lagerung eines Grillgutträgers dienenden Ausnehmung versehen. Auf diese Weise kann beispielsweise ein einzelner Fleischspiess in den Ausnehmungen gelagert werden.

In einer weiteren vorzugsweisen Ausgestaltung sind die ersten Seitenwände, in der Oberseitenmitte durch ein Trägerelement miteinander verbunden, welches dem Halten der Enden von mehreren Grillgutträgern dient, welche in den Ausnehmungen gelagert sind. Anstelle eines einzigen Fleischspiesses können daher zwei oder mehrere Fleischspiesse von halber Länge auf den Tischgrill aufgesetzt werden.

Der Brenner wird vorzugsweise in einem Brennergestell gehalten, welches ein dem Halten oder der Aufnahme des Brenners dienendes Mittelstück und zwei beidseits daran vorgesehene Fussstücke aufweist. Auf diese Weise können einfach ausgestaltete Brenner kostengünstig gefertigt und in das Brennergestell eingesetzt werden. Beispielsweise werden längsgestreckte, mit einer Folie verschlossene Aluminiumbecher verwendet, innerhalb derer eine brennbare Substanz vorzugsweise hoher Viskosität gelagert ist.

Vorzugsweise ist wenigstens eines der Fussstücke des Brennergestells mit einer Lasche versehen, die der Aufnahme einer an der Unterseite der zugehörigen zweiten Seitenwand vorgesehenen Nase dient. Das Brennergestell und der Luftschacht sind daher miteinander koppelbar, was auch mittels anderer Massnahmen möglich ist. Die gewählte Lösung ist jedoch deshalb besonders vorteilhaft, weil die Kopplung resultiert, sobald der Luftschacht über das Brennergestell aufgesetzt wird. Vorzugsweise liegen beide, das Brennergestell und der damit gekoppelte Luftschacht, auf der Oberfläche des Tischs auf und sind dadurch stabil gehalten. Bei einer aufwändigeren Ausgestaltung des Brennergestells kam dieses den Luftschacht alleine tragen.

Der erfindungsgemässe Tischgrill kann vorteilhaft aus wenigen Elementen gefertigt werden. Die beiden vorzugsweise identischen ersten und die beiden vorzugsweise identischen zweiten Seitenwände und/oder das Brennergestell werden vorzugsweise je aus einem Blechstück ausgeschnitten und geformt sind. Die ersten und zweiten Seitenwände sowie gegebenenfalls daran vorgesehene Flanschelemente werden vorzugsweise mit Öffnungen versehen, die der Aufnahme von Verbindungsmitteln dienen.

Nachfolgend wird die Erfindung anhand von Zeichnungen näher erläutert. Dabei zeigt:
- Fig. 1: von der Seite einen erfindungsgemässen Tischgrill 1 mit einem Brennergestell 2, über das ein Luftschacht 3 aufgesetzt ist, welcher gleichzeitig als Halterung für zwei Grillgutträger 9 dient;
- Fig. 2: in räumlicher Darstellung die wesentlichen Elemente des Tischgrills 1 von Figur 1;
- Fig. 3: gestanzte Bleche, die der Fertigung des Tischgrills 1 von Figur 1 dienen; und
- Fig. 4: einen Schnitt durch den Tischgrill 1 von Figur 1.

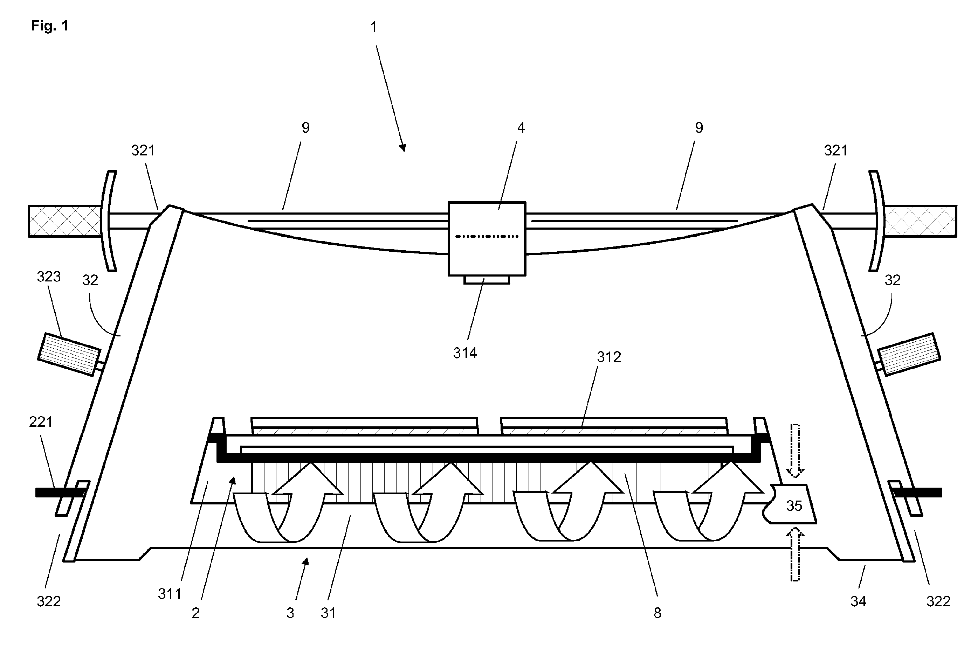

Figur 1 zeigt einen erfindungsgemässen Tischgrill 1 mit einem Brennergestell 2, über das ein Luftschacht 3 aufgesetzt ist, welcher gleichzeitig als Halterung für zwei Grillgutträger 9 dient.

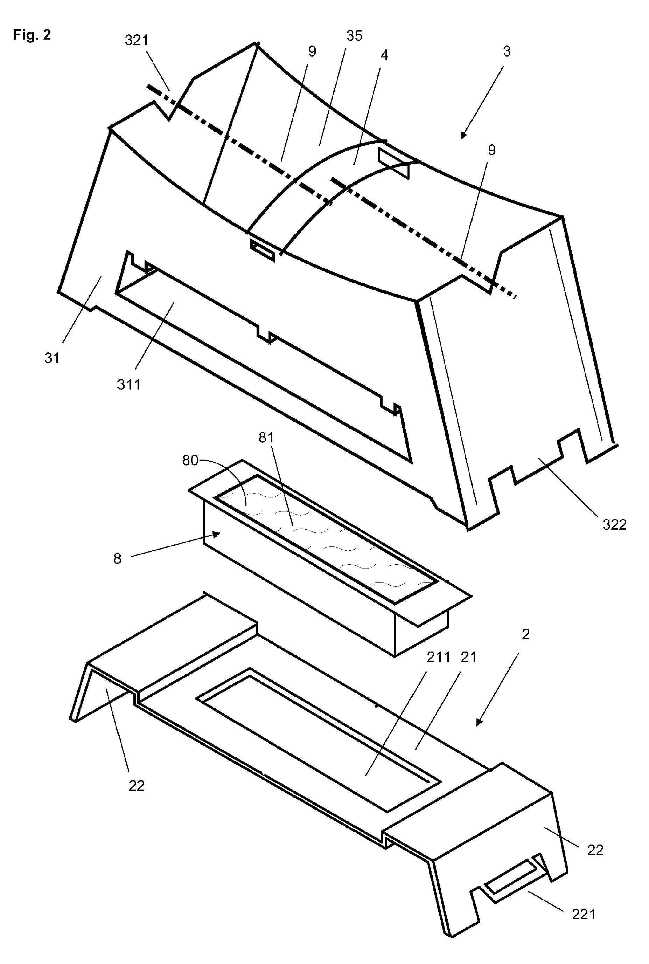

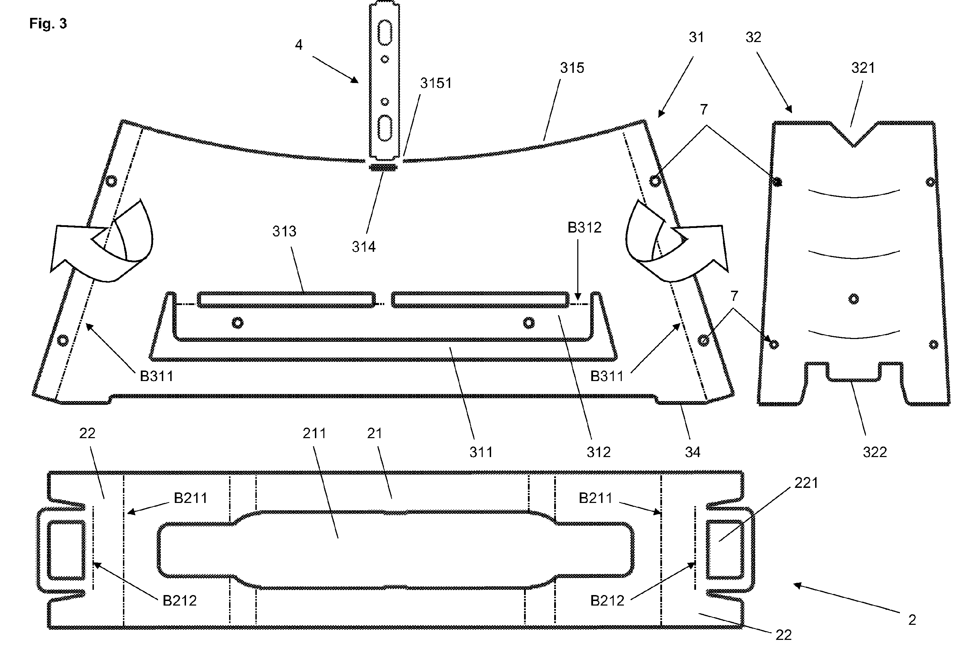

Das aus einem Blech (siehe Figur 3) gefertigte und in Figur 2 in räumlicher Darstellung gezeigte Brennergestell 2 weist ein Mittelstück 21 und zwei beidseits daran vorgesehene Fussstücke 2 auf. Im Mittelstück ist eine längsgestreckte, rechteckige Ausnehmung 21 vorgesehenen, die der Aufnahme des quaderförmigen Brenners 8 dient. Der in Figur 2 gezeigte Brenner 8 weist eine längsgestreckte, rechteckige Brenneröffnung 81 auf, und ist mit einer brennbaren Masse 80 versehen. Der Brenner 8 besteht beispielsweise aus einem mit der brennbaren Masse 80 gefüllten Aluminiumbecher, der mit einer ablösbaren Folie abgeschlossen ist. Brenner dieser Art können in hohen Stückzahlen kostengünstig gefertigt werden. Durch das Brennergestell 2 wird sichergestellt, dass der Brenner 8 sicher gehalten ist. An den auf einem Esstisch 10 ruhenden Fussstücken 22 des Brennergestells 2 sind laschenförmige Elemente 221 abgewinkelt und waagerecht ausgerichtet, in denen der auf das Brennergestell 2 aufgesetzte Luftschacht 3 lose verankert wird.

Der Luftschacht 3 weist zwei einander gegenüberliegende längere erste Seitenwände 31 und zwei einander gegenüberliegende kürzere zweite Seitenwände 32 auf, deren seitliche Enden miteinander verbunden sind und die ein rechteckförmiges, sich nach oben gegen die Austrittsöffnung 35 hin verjüngendes Rohrelement bilden. Figur 1 zeigt die Frontansicht einer ersten Seitenwand 31, an deren Enden die etwas nach aussen gewölbten zweiten Seitenwände 32 angeordnet sind, an deren Unterseiten nach unten in die Laschen 221 des Brennergestells 2 ragende Nasen 322 ausgeschnitten sind. Die miteinander verbundenen ersten und zweiten Seitenwände 31,32 bilden im Bereich der Verbindungsstellen Fusselemente 34, die, wie die Fussstücke 22 des Brennergestells 2 ebenfalls auf dem Esstisch 10 abgesetzt sind. Das Brennergestell 2 und der Luftschacht 3 ruhen daher stabil auf dem Esstisch 10.

Die einander gegenüber liegenden ersten Seitenwände 31 sind mit Öffnungsschlitzen 311 versehen, die parallel zur Brenneröffnung 81 ausgerichtet sind und sich entlang dem Brenner 8 erstrecken und diesen beidseits sogar überragen. Über den gesamten Querschnitt der Öffnungsschlitze 311 kann ein gleichmässig verteilter Luftstrom 61 in den Luftschacht 3 eintreten und nach zumindest annähernd vertikalem Verlauf nach oben durch die Austrittsöffnung 35 wieder austreten. Dadurch wird gewährleistet, dass der Luftstrom 61 die vom Brenner 8 abgegebene Wärme gleichmässig gegen den oder die Grillgutträger 9 führt. Das auf die Grillgutträger 9 aufgesetzte Grillgut wird daher gleichmässig erwärmt und gegart.

In Figur 1 ist ferner schematisch gezeigt, dass der Öffnungsschlitz 311 in einer vorzugsweisen Ausgestaltung mittels eines vorzugsweise vertikal verschiebbaren Schiebers oder Verschlusselements 38 zumindest teilweise geschlossen werden kann, so dass die Schlitzhöhe und somit der Luftstrom 61 passend eingestellt werden können.

Vorzugsweise wird der Öffnungsschlitz 311 in der ersten Seitenwand 31 vorgesehen, indem, wie in Figur 3 gezeigt, ein Flanschelement 312 in die erste Seitenwand 31 eingeschnitten und an dessen Seiten und unteren Ende freigelegt wird, so dass es nach innen gebogen werden kann. Wie in Figur 3 weiter gezeigt ist, können entlang der Biegelinie B312 Ausnehmungen 313 vorgesehen sein, welche es erlauben, das Flanschelement 312 leichter zu biegen.

Wie in Figur 1 gezeigt ist, dient der Luftschacht 3 vorteilhaft auch als Halterung für zwei Grillgutträger 9, die einerseits in Ausnehmungen 321 an den Oberseiten der zweiten Wandelemente 32, und andererseits in einem Trägerelement 4 gelagert sind, welches die Oberseiten der ersten Wandelemente 31 in der Mitte 3151 miteinander verbindet bzw. beidseits in dortigen Ausnehmungen 314 gehalten ist. Damit die Grillgutträger 9 waagerecht ausgerichtet bleiben, weisen die Oberseiten 315 der ersten Wandelemente 31 parabelförmige Ausschnitte auf, aufgrund derer das Trägerelement 4 vertikal etwas nach unten versetzt und auf gleicher Höhe wie die Ausnehmungen 321 gehalten wird. Ferner verleiht dieser parabelförmige Ausschnitt dem Tischgrill 1 eine vorteilhafte ästhetische Gestalt.

Die zweiten Seitenwände 32 sind ferner mit Haltegriffen 323 versehen, welche es erlauben, den Luftschacht 3 anzuheben.

In Figur 3 sind ausgestanzte Blechstücke gezeigt, aus denen erste und zweite Seitenwände 31,32; das Brennergestell 2 und das Trägerelement 4 geformt werden. Dazu sind am ersten Wandelement 31 Biegelinien B311 vorgesehen, entlang derer ein mit Öffnungen 7 versehenes Flanschelement 319, das mit einem zweiten Wandelement 32 verbunden wird, abgewinkelt wird. Zur Verbindung der beiden Teile 319 und 32 werden beispielsweise Nieten in zueinander korrespondierende Öffnungen 7 eingesetzt.

Das zweite Wandelement 32 wird normalerweise etwas nach aussen gewölbt, um den Tischgrill 1 ästhetisch weiter vorteilhaft auszugestalten.

Das ausgestanzte Element des Brennergestells 2 weist mehrere Biegelinien auf. Entlang den Biegelinien B211 werden die Fussstücke 22 nach unten abgewinkelt. Entlang den Biegelinien B212 werden die Laschen 221 nach oben gebogen, so dass sie etwa waagerecht ausgerichtet sind.

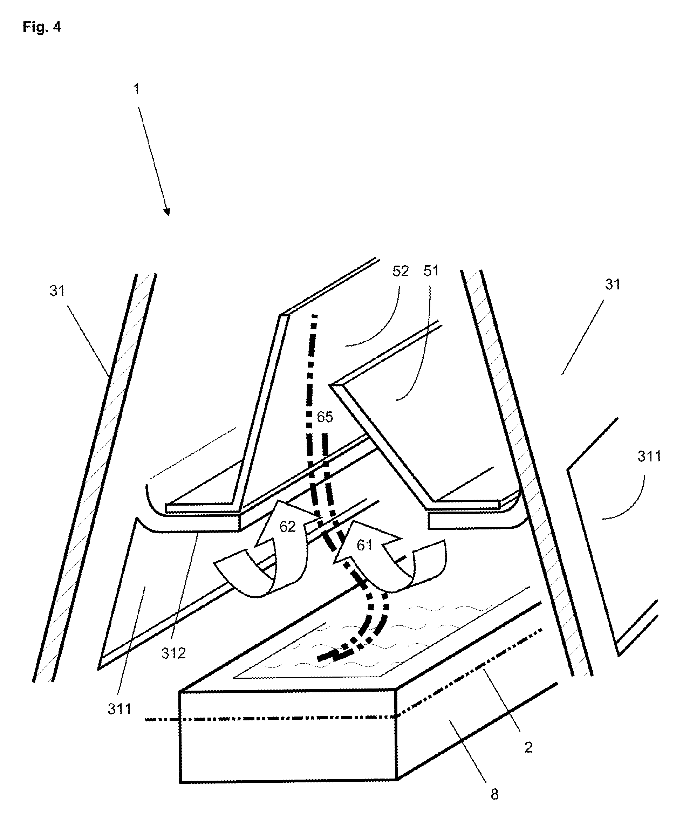

Figur 4 zeigt eine besonders vorteilhafte Ausgestaltung des Tischgrills 1. Bei dieser Ausgestaltung sind innerhalb des Luftschachts 3 Luftleitelemente 51, 52 parallel zur Brenneröffnung 81 ausgerichtet und mit den nach innen gebogenen Flanschelementen 312 der ersten Seitenwände verbunden. Mittels dieser Luftleitelemente 51, 52 werden die durch die Öffnungsschlitze 311 eintretenden Luftströmungen 61, 62 und die vom Brenner 8 abgegebenen Flammen 65 erfasst und gleichmässig geführt.

Die Luftleitelemente 51, 52 weisen in dieser besonders vorteilhaften Ausgestaltung unterschiedliche Neigungen auf, so dass das erste Luftleitelement 51 den von ihm geführten Luftstrom 61 gegen das zweite Luftleitelement 52 führt, welches einen resultierenden, weitgehend laminaren Luftstrom 61, 62 zur Austrittsöffnung 35 hin führt. Das erste Luftleitelement 51 ist vorzugsweise um etwa 45° und das zweite Luftleitelement 52 ist vorzugsweise um etwa 60° nach oben geneigt. Als Luftleitelemente eignen sich insbesondere Elemente aus wärmeresistentem, rostfreiem Stahl.

Die weiteren Elemente des Tischgrills 1 bestehen vorzugsweise ebenfalls aus Metall, das gegebenenfalls beschichtet bzw. veredelt ist.

### Literaturverzeichnis

- [1]: EP 0 617 908 A1
- [2]: DE 19649462 A1

## Patentansprüche

1. Tischgrill (1), geeignet zum Grillieren von Speisen, mit wenigstens einem Grillgutträger (9) und mit einem eine Austrittsöffnung (35) aufweisenden Luftschacht (3) mit zwei einander gegenüberliegenden längeren ersten Seitenwänden (31) und zwei einander gegenüberliegenden kürzeren zweiten Seitenwänden (32), innerhalb dessen ein Brenner (8) mit einer längsgestreckten Brenneröffnung (81) angeordnet ist, die entsprechend der Austrittsöffnung (35) ausgerichtet wird, **dadurch gekennzeichnet, dass** die einander gegenüber liegenden ersten Seitenwände (31) mit parallel zur Brenneröffnung (81) ausgerichteten Öffnungsschlitzen (311) versehen sind, durch die Luftströme (61, 62) in den Luftschacht (3) eintreten und durch die Austrittsöffnung (35) wieder austreten können.

2. Tischgrill (1) nach Anspruch 1, **dadurch gekennzeichnet, dass** innerhalb des Luftschachts (3) plattenförmige Luftleitelemente (51, 52) parallel zu den Öffnungsschlitzen (311) angeordnet sind, durch die die Luftströme (61, 62) erfasst und zur Austrittsöffnung (35) hin geführt werden.

3. Tischgrill (1) nach Anspruch 2, **dadurch gekennzeichnet, dass** die Luftleitelemente (51, 52) unterschiedliche Neigungen aufweisen, so dass das erste Luftleitelement (51) den von ihm geführten Luftstrom (61) gegen das zweite Luftleitelement (52) führt, welches einen resultierenden Luftstrom (61, 62) zur Austrittsöffnung (35) hin führt.

4. Tischgrill (1) nach Anspruch 1, 2 oder 3, **dadurch gekennzeichnet, dass** zumindest annähernd rechteckförmige Flanschelemente (312) aus den ersten Seitenwänden (31) derart ausgeschnitten sind, dass deren kürzere Seiten und die längere untere Kante frei liegen, und dass die je mit einem der Luftleitelemente (51, 52) versehenen Flanschelemente (312) nach innen gegeneinander gebogen sind, wodurch die Öffnungsschlitze (311) gebildet werden.

5. Tischgrill (1) nach einem der Ansprüche 1-4, **dadurch gekennzeichnet, dass** die Luftleitelemente (51, 52) mit den Flanschelementen (312) verbunden und aus hitzeresistentem Metall, vorzugsweise aus Stahlblech gefertigt sind, welches abgewinkelt wird.

6. Tischgrill (1) nach einem der Ansprüche 1-5, **dadurch gekennzeichnet, dass** die Länge der Öffnungsschlitze (311) etwa der Länge des Brenners (8) entspricht und/oder dass die Öffnungsschlitze (311) mittels eines vorzugsweise vertikal verschiebbaren Schiebers (35) zumindest teilweise verschliessbar sind.

7. Tischgrill (1) nach Anspruch 6, **dadurch gekennzeichnet**, die zweiten Seitenwände (32) oben jede mit wenigstens einer der Lagerung eines Grillgutträgers (9) dienenden Ausnehmung (321) versehen sind und/oder dass die ersten Seitenwände (31), deren Oberseiten (315) vorzugsweise einen parabelförmigen Ausschnitt aufweisen, in der Oberseitenmitte (3151) durch ein Trägerelement (4) miteinander verbunden sind, welches dem Halten der Enden von Grillgutträgern (9) dient, welche in den Ausnehmungen (321) gelagert sind.

8. Tischgrill (1) nach einem der Ansprüche 1-7, **dadurch gekennzeichnet, dass** der Brenner (8) in einem den Brennergestell (2) gehalten ist, welches ein dem Halten des Brenners (8) dienendes Mittelstück (21) und zwei beidseits daran vorgesehene Fussstücke (22) aufweist.

9. Tischgrill (1) nach Anspruch 8, **dadurch gekennzeichnet, dass** wenigstens eines der Fussstücke (22) mit einer Lasche (221) versehen ist, die der Aufnahme einer an der Unterseite der zugehörigen zweiten Seitenwand (32) vorgesehenen Nase (322) dient.

10. Tischgrill (1) nach Anspruch 8, **dadurch gekennzeichnet, dass** die beiden vorzugsweise identischen ersten, die beiden vorzugsweise identischen zweiten Seitenwände (31,32) und/oder das Brennergestell (2) je aus einem Blechstück ausgeschnitten und geformt sind.
